# EUROPEAN PATENT APPLICATION

(11) **EP 4 765 897 A1**
(43) Date of publication of application: **24.06.2026**
(21) Application number: 25221516.5
(22) Date of filing: 08.12.2025
(51) Int. Cl.: H04W 4/42, G06K 7/10, H04B 5/24, H04B 5/73, H04W 4/80, H04W 84/18, H04W 84/04

(54) **METHOD FOR ESTABLISHING A SHIP MONITORING NETWORK BASED ON MAGNETIC-FIELD COMMUNICATION**

(30) Priority: 11.12.2024 KR 20240183697
(71) Applicant: Korea Institute of Ocean Science and Technology, Busan 49111 (KR)
(72) Inventor: SHIM, Woo Seong, 34048 DAEJEON (KR); KIM, Bu Young, 34191 DAEJEON (KR)
(74) Representative: EP&C

(57) **Abstract**

An embodiment of the present invention provides a method for establishing a monitoring network in a ship using magnetic-field communication. The method includes: a signal generation step in which at least one sensor installed in each of a plurality of compartments senses an environment and a state within the corresponding compartment and generates a signal including sensing data; a signal reception step in which a multi-access access point (AP) installed in each compartment receives a signal generated from a sensor installed in the same compartment; an AP-to-AP signal transmission and reception step in which a plurality of multi-access APs respectively installed in the compartments mutually transmit and receive signals using a magnetic-field communication scheme; a monitoring-system connection step in which at least one of the plurality of multi-access APs is connected to a central monitoring system of the ship through a wired network; and a monitoring step in which the central monitoring system analyzes data from all of the sensors installed in the ship and monitors a state of the ship in real time.

## Description

### CROSS REFERENCE TO RELATED APPLICATION

The present application claims priority to Korean Patent Application No. 10-2024-0183697, filed 11 December 2024, the entire contents of which is incorporated herein for all purposes by this reference.

### BACKGROUND OF THE INVENTION

### Field of the Invention

The present invention relates to a method for establishing an in-ship monitoring network based on magnetic-field communication.

### Description of the Related Art

Magnetic induction communication (MIC) is a wireless communication technique that transmits data using a magnetic field. Unlike conventional electromagnetic-wave-based communication methods such as Wi-Fi, Bluetooth, or radio frequency (RF), MIC employs low-frequency magnetic fields to transmit and receive signals over short distances. A transmitting device for MIC generates a magnetic field through a coil carrying an electric current, and a receiving device converts variations in the magnetic field detected by a receiving coil into electrical signals.

MIC typically uses a low-frequency band, generally in the kHz-to-MHz range, and is effective over short distances of several meters or less. It is resistant to environmental interference and is capable of transmitting and receiving signals even in media where radio-wave propagation is difficult, such as water, soil, and metal. Due to these advantages, MIC has been applied in environments where radio-wave communication is challenging, including underground structure monitoring, mining operations, and underwater exploration. It is also utilized for communication between internal medical devices such as pacemakers and cochlear implants, and is used in low-power, short-range IoT sensor networks.

Bulkheads of a ship are vertical structures that divide the interior of the ship into compartments and play an important role in enhancing the strength and safety of the hull. Bulkheads are installed transversely across the ship to separate internal spaces, ensure watertight integrity, and prevent the spread of fire. However, such bulkheads may impose limitations when utilizing conventional RF-based wireless communication for building an internal network within the ship.

Magnetic-field communication can overcome the limitations of conventional RF-based wireless communication by using the bulkheads of a ship as a medium for signal transmission. However, magnetic fields generated by the metallic structures of the ship and by internal electrical equipment may interfere with communication signals. In particular, strong magnetic fields can be generated by components such as engines, generators, and electric motors. Furthermore, because magnetic-field communication is effective only at short ranges, it is difficult to cover the entire area of a large ship. In addition, interference and signal collision may occur in multi-user environments.

### SUMMARY OF THE INVENTION

The object of the present invention is to provide a method for establishing a magnetic-field-communication-based ship monitoring network that can be applied to large ships.

According to an aspect of the present invention, a method for configuring a monitoring network in a ship using magnetic-field communication comprises: a signal generation step in which at least one sensor installed in each of a plurality of compartments senses an environment and a state within the corresponding compartment and generates a signal including sensing data; a signal reception step in which a multi-access access point (AP) installed in each compartment receives a signal generated from a sensor installed in the same compartment; an AP-to-AP signal transmission and reception step in which a plurality of multi-access APs respectively installed in the compartments mutually transmit and receive signals using a magnetic-field communication scheme; a monitoring-system connection step in which at least one of the plurality of multi-access APs is connected to a central monitoring system of the ship through a wired network; and a monitoring step in which the central monitoring system analyzes signals transmitted from all of the sensors installed in the ship and monitors a state of the ship in real time.

After the monitoring-system connection step, the method may further comprise a path-setting step between the multi-access APs. The path-setting step between the multi-access APs may include: analyzing signals transmitted from all of the sensors; determining a multi-access access point to be avoided in a transmission path; generating coordination information by determining a transmission path that reflects the multi-access access point determined to be avoided; and transmitting the coordination information to the plurality of multi-access access points.

The magnetic-field communication may be configured to utilize a low-frequency magnetic field so as to minimize an influence of metal structures between the compartments.

The multi-access access point (AP) may be configured to minimize communication interference with a plurality of sensors by employing dynamic frequency allocation and a time-division multiple access (TDMA) scheme.

The sensor may be capable of sensing data including environmental monitoring information, structural integrity information, fire detection information, mechanical condition diagnostics information, and location tracking information.

The method may further comprise a step of immediately alerting a ship operation system or crew members with the corresponding information when the central monitoring system detects an abnormal condition within the ship.

According to an embodiment of the present invention, the method for establishing a ship monitoring network based on magnetic-field communication can overcome the limitations of conventional RF-based wireless communication, while also addressing the limited coverage inherent to magnetic-field communication, thereby enabling applicability to monitoring systems of large ships.

A transmission path may be determined in consideration of the structure of the ship and the characteristics of each part of the ship, thereby enabling the construction of a network that is robust against interference.

### BRIEF DESCRIPTION OF THE DRAWINGS

FIG. 1 is a flowchart illustrating a method for establishing a ship monitoring network based on magnetic-field communication according to an embodiment of the present invention.

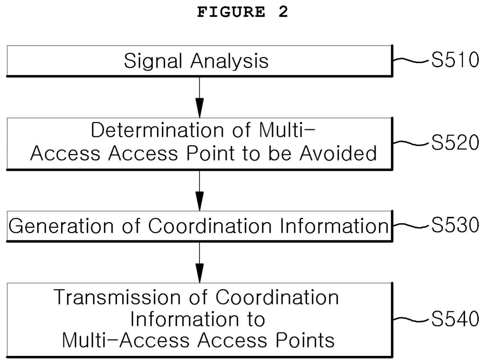

FIG. 2 is a flowchart illustrating an example procedure for setting a transmission path in the method for establishing a ship monitoring network based on magnetic-field communication according to an embodiment of the present invention.
FIGS. 3 to 4 illustrate examples in which the method for establishing a ship monitoring network based on magnetic-field communication according to an embodiment of the present invention is applied.
FIG. 5 is an example configuration of a computing device in which the method for establishing a ship monitoring network based on magnetic-field communication according to an embodiment of the present invention may be implemented.

### DETAILED DESCRIPTION OF THE INVENTION

In describing embodiments of the present invention, detailed descriptions of well-known technologies related to the present invention may be omitted when it is determined that such descriptions could unnecessarily obscure the gist of the invention. Terms used in the following description are defined in consideration of the functions of the present invention, and such definitions may vary depending on the intention or customary practice of the user or operator. Therefore, these definitions should be interpreted based on the overall content of this specification.

The terms used in the detailed description are intended only to describe exemplary embodiments of the present invention and are not to be construed as limiting. Unless explicitly stated otherwise, expressions in the singular form should be interpreted to include the plural form. In this description, expressions such as "include" or "comprise" are intended to indicate the presence of stated features, numbers, steps, operations, elements, or combinations thereof, and should not be interpreted as excluding the possibility of the presence or addition of one or more other features, numbers, steps, operations, elements, or combinations thereof.

In the systems illustrated in the drawings, elements in certain cases may have the same reference numerals or different reference numerals, indicating that the represented elements may be identical or similar. However, the elements may have different implementations and may operate with some or all of the systems shown or described in this specification. The various elements illustrated in the drawings may be identical or different. The designation of a particular element as a first element and another as a second element is arbitrary.

In this specification, when a component is described as "transmitting" or "providing" data or a signal to another component, this includes not only directly transmitting the data or signal to the other component, but also transmitting the data or signal to the other component through at least one additional component.

In this specification, the term "monitoring system" refers to one or more physical or logical entities implemented as a computing device in which all or some of the steps of the method for establishing a ship monitoring network based on magnetic-field communication according to embodiments of the present invention may be executed. The monitoring system may include a server, and when the server is implemented as multiple physical entities, the managing entities of the respective physical entities may differ from one another.

All or some of the steps of the method for establishing a ship monitoring network based on magnetic-field communication according to embodiments of the present invention may be implemented by a single physical or logical computing device or may be distributed and implemented by two or more physical or logical computing devices.

The term "server" may include a database (DB), which refers to a functional and structural combination of software and hardware for storing information corresponding to each database. The DB may be implemented as at least one table and may further include a separate database management system (DBMS) for retrieving, storing, and managing information stored in the database. In addition, the DB may be implemented in various forms, such as a linked list, a tree, or a relational database, and includes all data storage media and data structures capable of storing information corresponding to the database.

Hereinafter, specific embodiments of the present invention will be described with reference to the accompanying drawings. The following detailed description is provided to facilitate a comprehensive understanding of the methods, apparatuses, and/or systems described in this specification. However, this is merely exemplary, and the present invention is not limited thereto.

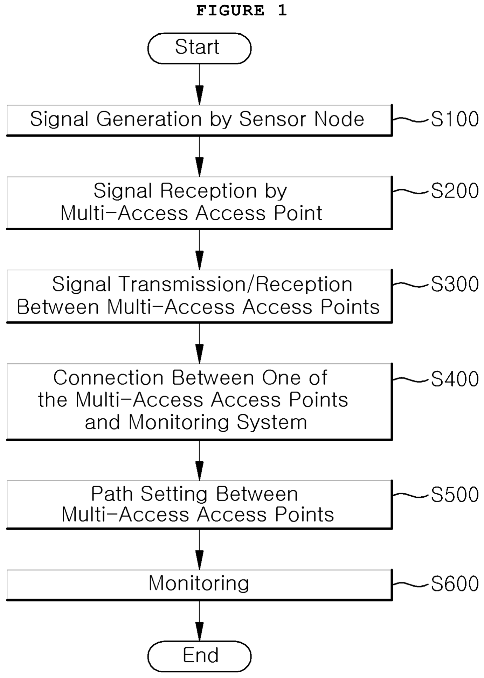

FIG. 1 is a flowchart illustrating a method for establishing a ship monitoring network based on magnetic-field communication according to an embodiment of the present invention.

According to an embodiment of the present invention, a method for establishing a monitoring network in a ship using magnetic-field communication may include: a signal generation step (S100) in which at least one sensor installed in each of a plurality of compartments senses an environment and a state within the corresponding compartment and generates a signal including sensing data; a signal reception step (S200) in which a multi-access access point (AP) installed in each compartment receives a signal generated from a sensor installed in the same compartment; an AP-to-AP signal transmission and reception step (S300) in which a plurality of multi-access APs respectively installed in the compartments mutually transmit and receive signals using a magnetic-field communication scheme; a monitoring-system connection step (S400) in which at least one of the plurality of multi-access APs is connected to a central monitoring system of the ship through a wired network; and a monitoring step (S600) in which the central monitoring system analyzes signals transmitted from all of the sensors installed in the ship and monitors a state of the ship in real time.

In another embodiment, a step (S500) of setting a path between the multi-access access points may be further included after the monitoring-system connection step (S400). The step (S500) may include: a step (S510) of analyzing signals transmitted from all of the sensors after the monitoring-system connection step (S400); a step (S520) of determining a multi-access access point to be avoided in a transmission path; a step (S530) of generating coordination information by determining a transmission path that reflects the multi-access access point determined to be avoided; and a step (S540) of transmitting the coordination information to the plurality of multi-access access points.

Describing each step in greater detail, at least one sensor may be disposed in each of a plurality of compartments of the ship. From a network perspective, an individual sensor may function as a single node, or a plurality of sensors may collectively function as one node.

Various types of sensors may be installed in the compartments of the ship in order to maintain safety and operational efficiency. These sensors monitor the operating state of the ship in real time and provide alerts when an abnormal situation occurs, thereby preventing accidents.

The sensors may be capable of sensing data including environmental monitoring information, structural integrity information, fire detection information, mechanical condition diagnostics information, and location tracking information.

In one embodiment, the sensors may include any one or a combination of a level sensor, a temperature sensor, a pressure sensor, a gas sensor, a humidity sensor, a smoke and fire detector, a vibration sensor, an impact and inclination sensor, a door status sensor, and a camera or video surveillance system. In addition, various other information acquisition means, including sensors capable of acquiring meaningful information for the normal operation of the ship, may also be applied.

In one embodiment, a level sensor may monitor the level of liquid (e.g., water, oil, liquefied gas, and the like) within a compartment. In one embodiment, the level sensor may be disposed in a ballast water tank, a fuel tank, or a bilge area. In one embodiment, the level sensor may be an ultrasonic level sensor, a float-type level sensor, or a capacitive sensor.

In one embodiment, a temperature sensor may monitor the temperature of mechanical equipment, fuel, and cargo. In one embodiment, the temperature sensor may be disposed in an engine room, a refrigerated cargo compartment, or fuel and lubricating oil tanks. In one embodiment, the temperature sensor may be a thermocouple or a resistance temperature detector (RTD).

In one embodiment, a pressure sensor may detect the pressure of a fluid and monitor the condition of pump and piping systems. In one embodiment, the pressure sensor may be disposed in fuel and oil lines, cooling water systems, or pneumatic and hydraulic systems. In one embodiment, the pressure sensor may be an absolute pressure sensor or a differential pressure sensor.

In one embodiment, a gas sensor may detect and monitor the leakage of gases such as carbon dioxide, methane, ammonia, and the like. In one embodiment, the gas sensor may be disposed in a cargo compartment of a ship transporting gases or chemical substances, an engine room, or a bilge area, and an electrochemical sensor or an infrared-type sensor may be employed.

In one embodiment, a humidity sensor may monitor the humidity within a compartment to prevent corrosion and cargo damage. In one embodiment, the humidity sensor may be disposed in a cargo compartment or an engine room.

In one embodiment, a smoke and fire detector may monitor for the occurrence of a fire and provide an early warning by detecting a fire at an early stage. In one embodiment, the smoke and fire detector may be disposed in all major compartments, including an engine room and cargo spaces, and may be a photoelectric smoke detector or a heat detector.

In one embodiment, a vibration sensor may monitor the condition of various machines provided in the ship and detect abnormal vibrations at an early stage. In one embodiment, the vibration sensor may be disposed on an engine, a generator, or a propeller shaft.

In one embodiment, an impact and inclination sensor may detect the inclination and impacts of the ship and monitor its balance condition.

In one embodiment, a door status sensor may monitor the open or closed state of a door or hatch of a compartment. The door status sensor may be utilized to maintain airtightness or security in a specific area.

In one embodiment, a camera or video surveillance system may visually confirm the condition of a compartment by providing real-time video monitoring. The camera or video surveillance system may be disposed in compartments requiring real-time visual inspection, may remain in an inactive state and become activated when a specific event occurs, or may be activated by the monitoring system to acquire and provide video information.

The sensors may generate a signal containing the sensed data and transmit the signal to a multi-access access point. Transmission and reception of signals between the sensor node and the multi-access access point may be performed using wired or wireless communication protocols, and in one embodiment, magnetic-field communication may be employed.

In one embodiment, the signal generated by the sensor may further include location information of the sensor, an identifier indicating the type of data transmitted by the sensor, and an identifier indicating the priority of the transmission.

The multi-access access point may collect sensor data within a compartment and function as a local hub. The multi-access access point that receives a signal generated by a sensor may receive the signal through conventional wired or wireless communication protocols, including magnetic-field communication. The multi-access access point may be disposed in major locations of the ship requiring monitoring, including each compartment.

Magnetic-field communication may be used for transmitting and receiving signals between a plurality of multi-access access points disposed at major locations of the ship. This enables the minimization of wiring within the ship's network and simplifies installation and maintenance. The multi-access access points may be installed on bulkheads, piping, or other structures that function as a medium for magnetic-field communication. The placement of the multi-access access points may be determined in consideration of coverage and the characteristics of the monitoring targets.

Magnetic-field communication between the multi-access access points may be configured to utilize a low-frequency magnetic field so as to minimize an influence of metal structures between the compartments.

The multi-access access point (AP) may be configured to minimize communication interference with a plurality of sensors by employing dynamic frequency allocation and a time-division multiple access (TDMA) scheme.

During the transmission and reception of signals through magnetic-field communication between the plurality of multi-access access points, the monitoring system may be connected to any one of the multi-access access points. Here, the term "connected" is not limited to a physical connection via a wired network, but may include any form of connection capable of transmitting and receiving signals through various communication protocols.

The monitoring system may monitor the state of the ship in real time based on data collected from various compartments and major locations of the ship. As described above, the monitoring system may activate or deactivate a specific sensor when a specific event occurs.

In one embodiment, the monitoring system may set a signal transmission path between the multi-access access points. The monitoring system may function as a coordinator by determining the transmission path, order, and priority of signals and transmitting the determined transmission path, order, and priority to the multi-access access points.

When the monitoring system is connected to the multi-access access points, it may analyze the signals received from the multi-access access points, determine a multi-access access point to be avoided during the path-setting process, generate coordination information, and transmit the coordination information to the multi-access access points. The multi-access access points may determine a target access point for transmission based on the coordination information.

During the path-setting process, the position of a multi-access access point to be avoided may be taken into consideration. When configuring a magnetic-field communication network in a ship, various onboard facilities may affect signal interference or transmission quality. For example, various electrical and electronic equipment installed in the ship, metallic structures, radar and communication equipment, power systems and cabling, navigation and automation equipment, lighting systems, and engine and propulsion systems may be major factors to consider. That is, a multi-access access point installed near machinery, devices, or facilities that may significantly affect the transmission quality of magnetic-field communication may be excluded from the signal transmission path. A multi-access access point excluded from the signal transmission path may perform only the function of receiving signals from sensors connected thereto and transmitting the signals to the monitoring system via other multi-access access points.

For example, generators and motors may generate strong magnetic fields and electromagnetic interference (EMI), which may affect the quality of magnetic-field communication. Similarly, multi-access access points installed near inverters and converters, electrical panels and switchboards, radar systems, satellite and radio communication equipment, high-voltage cables, battery and charging systems, gyroscopes and electronic compasses, automation and control systems, LED and fluorescent lighting, the main engine and auxiliary engines, or electric propulsion systems may be determined as access points to be avoided.

In one embodiment, when the monitoring system analyzes signals and sets a transmission path, the type of sensing data and its priority (urgency) may be reflected. For example, the monitoring system may dynamically allocate frequencies according to the type of sensed data and assign different channels based on the type and priority of the data to minimize interference. In another embodiment, multiple sensors may share the same frequency band by using different time slots through a time-division multiple access (TDMA) scheme. This may prevent data collisions among multiple sensors and enable efficient signal transmission and reception in various sensor networks within the ship.

In one embodiment, when the monitoring system detects an abnormal condition within the ship, it may include a function of immediately alerting the ship's operation system or the crew with abnormal-state information. The monitoring system may automatically analyze abnormal conditions based on data collected from sensors through real-time data analysis, thereby detecting potential hazards that may occur during ship operation (e.g., flooding, fire, mechanical failures) at an early stage. When an abnormal condition is detected, the monitoring system may immediately notify the crew through audiovisual alerts (e.g., alarms, lights) and may execute automated responses (e.g., closing a specific area, activating firefighting equipment). In addition, the monitoring system may transmit warning messages to the ship management system, the navigation system, and the crew's portable devices to support rapid decision-making.

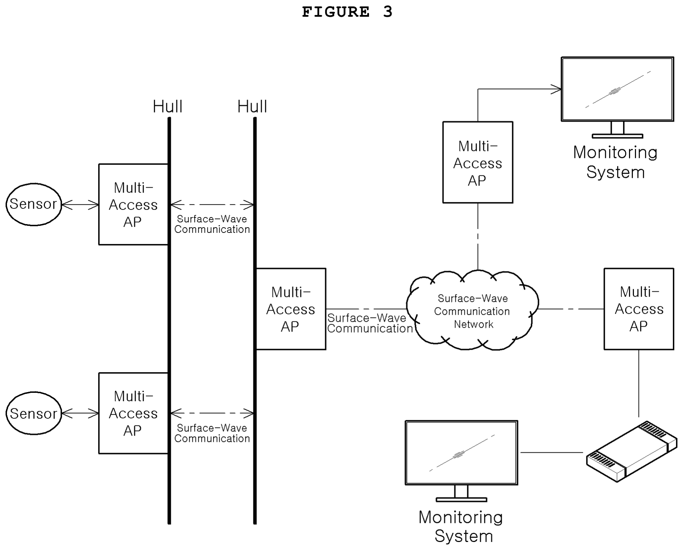

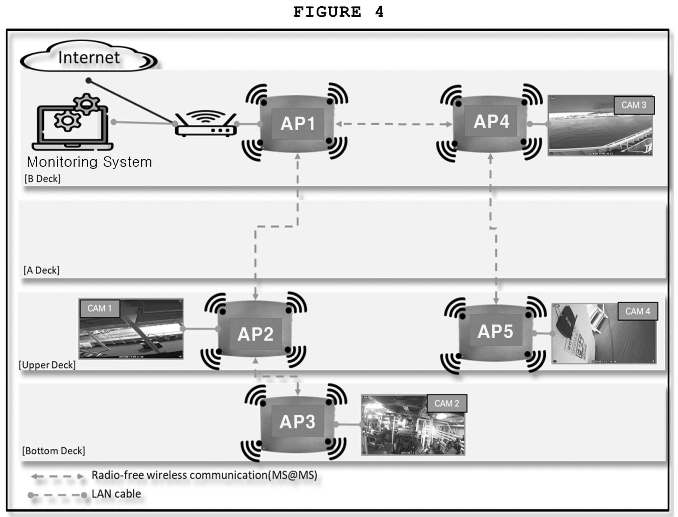

FIGS. 3 to 4 illustrate examples in which the method for establishing a ship monitoring network based on magnetic-field communication according to an embodiment of the present invention is applied. In FIGS. 3 to 4, the connection structures and configurations among the monitoring system, the APs, and the sensor nodes are merely illustrative.

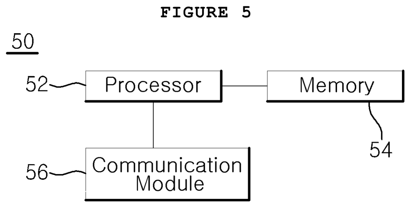

FIG. 5 is a block diagram of a monitoring system according to an embodiment of the present invention.

The monitoring system 50 may include a processor 52 and a memory 54. In one embodiment, the monitoring system 50 may further include a communication module 56. The processor 52, the memory 54, and the communication module 56 may be functionally connected to one another. The memory 54 may store algorithms for implementing the method for establishing a ship monitoring network based on magnetic-field communication according to the embodiments of the present invention, as well as structural information of the ship and specification information of major facilities. The processor 52 may implement the functions of the monitoring system described in the various embodiments above.

The processor 52 may include an application-specific integrated circuit (ASIC), another chipset, a logic circuit, and/or a data processing device. The memory 54 may include a read-only memory (ROM), a random-access memory (RAM), a flash memory, a memory card, a storage medium, and/or another storage device. When an embodiment is implemented in software, the above-described techniques may be implemented as modules (processes, functions, and the like) that perform the above-described functions. The memory 54 may be located either inside or outside the processor 52 and may be connected to the processor 52 by various well-known means.

The above description of the present invention is provided for illustrative purposes, and it will be understood by those skilled in the art that various modifications may be made without departing from the technical spirit or essential characteristics of the invention. Therefore, the embodiments described above are to be considered illustrative in all respects and not restrictive.

The scope of the present invention is defined not by the foregoing detailed description but by the following claims, and all modifications or variations derived from the meaning, scope, and equivalents of the claims are to be construed as being included within the scope of the present invention.

## Claims

1. A method for establishing a ship monitoring network based on magnetic-field communication, the method comprising:
a signal generation step in which at least one sensor installed in each of a plurality of compartments of a ship senses an environment and a state within the corresponding compartment and generates a signal including sensing data;
a signal reception step in which a multi-access access point (AP) installed in each of the compartments receives the signal generated from the sensor installed in the same compartment;
an AP-to-AP signal transmission and reception step in which a plurality of multi-access APs respectively installed in the compartments mutually transmit and receive signals using a magnetic-field communication scheme;
a monitoring-system connection step in which at least one of the plurality of multi-access APs is connected to a central monitoring system of the ship through a wired network; and
a monitoring step in which the central monitoring system analyzes signals transmitted from all of the sensors installed in the ship and monitors a state of the ship in real time.

2. The method of claim 1, further comprising, after the monitoring-system connection step, a path-setting step between the multi-access APs,
wherein the path-setting step between the multi-access APs comprises:
analyzing the signals transmitted from all of the sensors;
determining a multi-access access point to be avoided in a transmission path;
generating coordination information by determining a transmission path that reflects the multi-access access point determined to be avoided; and
transmitting the coordination information to the plurality of multi-access access points.

3. The method according to any one of the preceding claims, wherein the magnetic-field communication is configured to utilize a low-frequency magnetic field so as to minimize an influence of metal structures between the compartments.

4. The method according to any one of the preceding claims, wherein the multi-access AP is configured to minimize communication interference with a plurality of sensors by employing dynamic frequency allocation and a time-division multiple access (TDMA) scheme.

5. The method according to any one of the preceding claims, wherein the sensor is capable of sensing data including environmental monitoring information, structural integrity information, fire detection information, mechanical condition diagnostics information, and location tracking information.

6. The method according to any one of the preceding claims, further comprising a step of immediately alerting a ship operation system or crew members with abnormal-state information when the central monitoring system detects an abnormal condition within the ship.
